# EUROPEAN PATENT SPECIFICATION

(11) **EP 2 433 041 B1**
(45) Date of publication and mention of the grant of the patent: **03.07.2013**
(21) Application number: 10723795.0
(22) Date of filing: 20.05.2010
(51) Int. Cl.: F16K 31/00, G05D 23/13

(54) **A SAFETY DISCHARGE VALVE ASSEMBLY FOR A FLUID CIRCUIT**
SICHERCHEITSABLASSVENTIL FÜR FLUIDKREISLAUF
PURGEUR DE SECURITÉ POUR UN CIRCUIT DE FLUIDE

(30) Priority: 22.05.2009 IT TO20090390
(43) Date of publication of application: 28.03.2012
(73) Proprietor: ELBI International S.p.A., 10129 Torino (IT)
(72) Inventor: FARANO, Michele, I-10137 Torino (IT); MUSSO, Marco, I-10082 Cuorgne' (Torino) (IT)
(74) Representative: Quinterno, Giuseppe
(86) International application number: PCT/IB2010/052244
(87) International publication number: WO 2010/134041

(56) References cited:
- EP-A1- 2 000 718
- EP-A2- 0 697 315
- US-A- 5 984 195

## Description

The present invention relates to a safety discharge valve assembly of the kind defined in the preamble of claim 1 for use in a fluid system or circuit such as a boiler for a heating installation or a heat pump system.

US 5 984 195 A discloses a safety valve assembly of that kind for controlling a commercial or residential hot water supply system for personal use.

EP 0 697 315 A2 discloses a valve assembly for an anti-lock brake system, with a shape memory control member cooperating with an articulated parallelogram for controlling the position of a valve spool.

An objective of the present invention is to provide an improved safety discharge valve assembly which has a relatively simple structure and is highly reliable in operation.

This and other objectives are achieved, according to the invention, by a safety discharge valve assembly having the features defined in claim 1.

Further features and advantages of the invention will become clear from the following detailed description which is given purely by way of non-limiting example, with reference to the appended drawings, in which:
Figure 1 is a perspective view of a safety discharge valve assembly according to the present invention,
Figure 2 is a plan view taken in the direction of the arrow II of Figure 1,
Figure 3 is a section taken on the line III-III of Figure 2,
Figure 4 is a partial view, sectioned on the line IV-IV of Figure 2,
Figure 5 is a view similar to that of Figure 3 and shows a variant, and
Figure 6 is a sectioned view which shows another embodiment of a safety discharge valve assembly according to the present invention.

A safety discharge valve assembly according to the present invention is generally indicated 1 in the drawings.

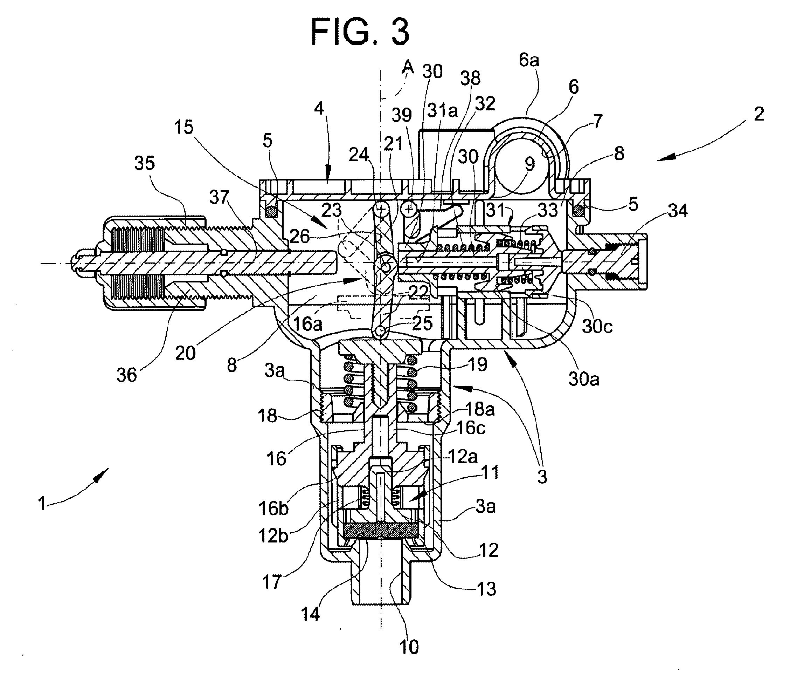

In the embodiment shown by way of example, the valve assembly 1 comprises a hollow body, generally indicated 2, including a lower shell 3 which is closed at the top by a shaped cover 4 with the interposition of a sealing ring 5 (see Figure 3 in particular).

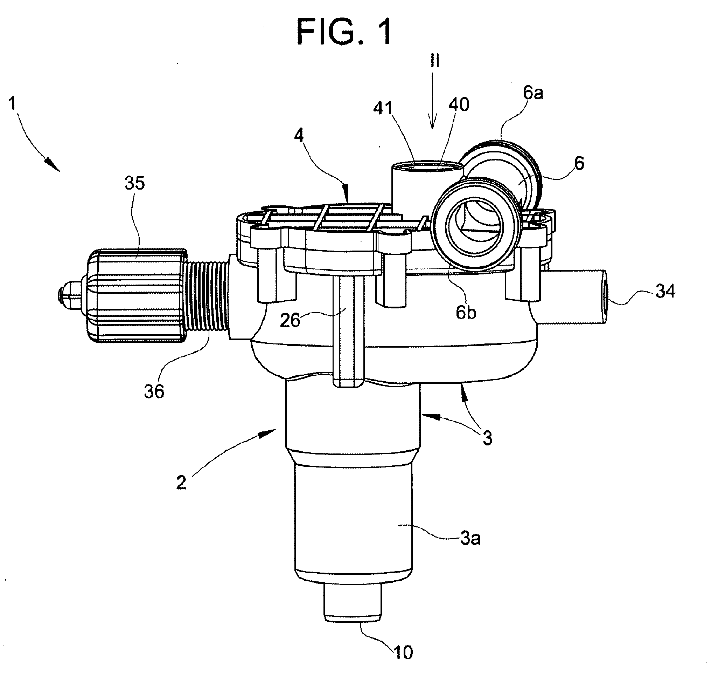

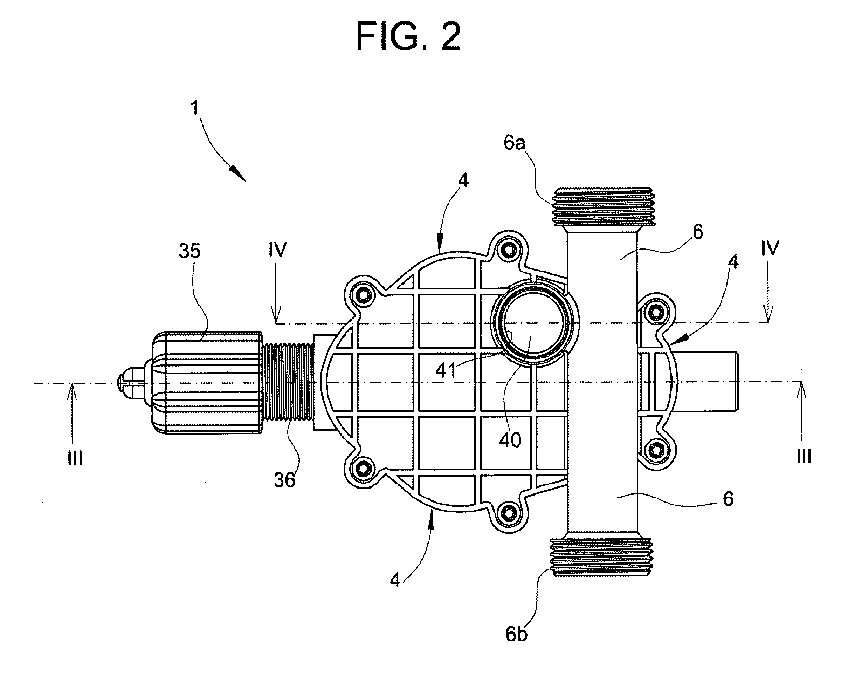

The cover 4 forms an integral, substantially tubular element 6 which is provided with two threaded end connectors 6a and 6b (Figures 1 and 2) for connection to the fluid system or circuit in which the discharge valve assembly 1 is to be used.

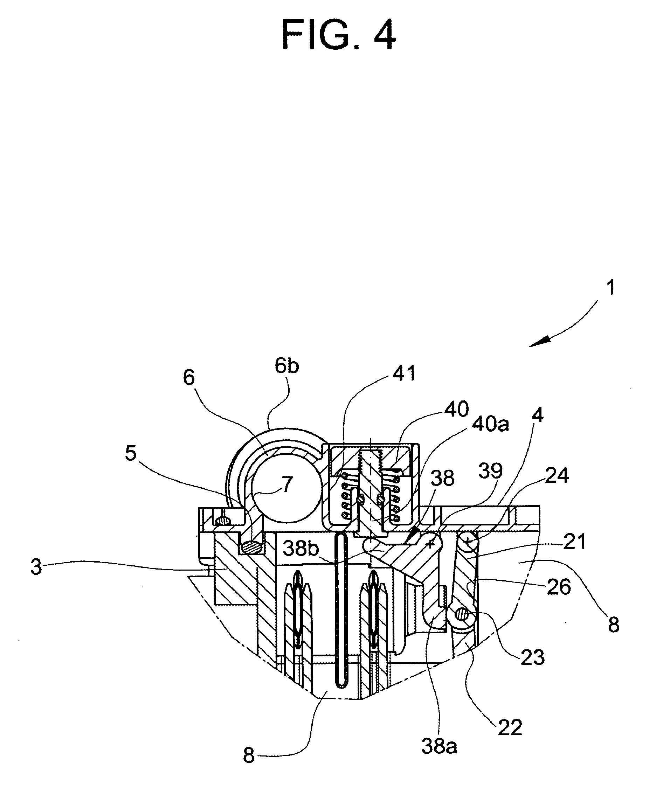

With reference to Figures 3 and 4, an axial duct 7 is defined in the tubular element 6.

A chamber, generally indicated 8 in Figure 3 and the following drawings, is defined in the body 2 of the valve assembly 1.

The chamber 8 has an upper inlet opening 9 communicating with the axial duct 7 of the tubular element 6. The chamber 8 is intended to be put operatively into communication, through the opening 9, with the fluid system or circuit in which the discharge valve assembly 1 is used.

The chamber 8 has a lower discharge duct 10 with which a normally closed shut-off device, generally indicated 11, is associated.

In the embodiment according to Figures 1 to 4, the shut-off device 11 comprises, substantially, a body 12 which is mounted movably in a tubular protuberance 3a of the lower shell 3 and is provided with a closure member 13, for example, made of elastomeric material, cooperating with a valve seat 14 provided in the discharge duct 10.

A device 15 for controlling the shut-off device 11 is provided in the chamber 8. In the embodiment according to Figures 1 to 4, the device 15 comprises, substantially, a movable body 16 having an upper head portion 16a and a lower head portion 16b, the latter being coupled slidingly with an upper shank 12a of the body 12.

The smaller cross-sectioned, intermediate portion 16c of the body 16 extends slidingly through a plate 18 which is fixed (for example, screwed) in the tubular appendage 3a of the lower shell 3 and is provided with a plurality of through-holes 18a.

The body 12 which carries the closure member 13 has a plurality of lateral longitudinal appendages 12b which extend upwardly and are engaged on the head portion 16b of the body 16.

A strong helical spring 19 interposed between the plate 18 and the head portion 16a of the body 16 tends to urge the body 16 upwards towards a position or condition in which the closure member 13 can release the seat 14 and allow the fluid to be discharged from the chamber 8.

However, as stated above, the shut-off device 11 is normally closed since the movable body 16 is normally held in the restrained condition shown in Figure 3 in which the shut-off device 11 prevents the discharge of the fluid from the chamber 8.

The body 16 is in fact held in the restrained condition by a retaining mechanism generally indicated 20 in Figure 3.

In the embodiment shown by way of example in this drawing, the retaining mechanism 20 is of the releasable and resettable type. As will be explained further below, in a first condition shown in Figure 3, this mechanism can keep the movable member 16 in the restrained condition to which the closed condition of the shut-off device 11 corresponds. In a second condition, shown partially in broken outline in Figure 3, the retaining mechanism 20 releases the movable member 16 which rises under the effect of the spring 19, allowing the shut-off device 11 to open.

In the embodiment according to Figures 1 to 4, the retaining mechanism comprises a toggle assembly including two plate-like members 21 and 22 which are articulated to one another about a substantially horizontal axis at 23. The upper plate-like member 21 is articulated to the shell 3 about a fixed horizontal axis 24.

The lower end of the plate-like member 22, on the other hand, is provided laterally with horizontal transverse pins 25 which are mounted for sliding in respective vertical channelled guides 26 formed in mutually facing portions of the side wall of the shell 3 (see Figures 1, 3 and 4).

With reference to Figure 3, the axes of the channelled guides 26, indicated A, extend through the horizontal axis 24 of articulation of the upper plate-like member 21.

A reaction and thrust member 30 associated with the toggle assembly 21, 22 is mounted so as to be translatable horizontally inside and through a structure generally indicated 31.

In the embodiment shown, the member 30 has an intermediate portion 30a of larger diameter, from which respective end portions 30b and 30c extend on opposite sides. The portion 30b which faces the toggle assembly 21, 22 is mounted for sliding through an end opening 31a of the structure 31.

The reaction and thrust member 30 is suspended resiliently inside the structure 31 between two helical springs 32 and 33 which extend between the intermediate portion 30a of the member and the opposite end portions of the structure.

The helical spring 33, which extends around the end 30c of the body 30, is a conventional spring, for example, a steel spring.

The other spring 32, which extends around the portion 30b of the body 30, is a spring made of a metallic material with shape memory, for example, NiTi. A material of this type has the characteristic that it changes state as a result of a temperature change, changing, for example, from an austenitic structure to a martensitic structure, or vice versa, and this leads to a reduction or an increase in the thrust exerted by the spring.

At the end remote from the toggle assembly 21, 22, the structure 31 bears on the end of a calibration screw 34 which is screwed into a corresponding hole in the shell 3.

The springs 32 and 33 act on the reaction and thrust member 30 in opposite directions and the screw 34 permits precise calibration of the temperature value of the fluid in the chamber 8 below which the spring 32 "yields", allowing the spring 33 to urge the member 30 towards the region of the articulation between the two plate-like members 21 and 22 of the toggle assembly.

The arrangement described above is such that, in the normal condition (shut-off device 11 closed), the toggle assembly 21, 22 is in the condition shown in Figure 3, that is, with the articulation axis 23 situated on the same side of the axis A as the reaction and thrust member 30. In this condition, an angle of almost 180° is defined between the plate-like members 21 and 22 of the toggle assembly. The region of the articulation between the plate-like members 21 and 22 bears against an end of the reaction and thrust element 30, which maintains its position by virtue of the equilibrium between the forces exerted on it by the toggle assembly 21, 22 and by the assembly comprising the springs 32 and 33.

The above-described situation is maintained, in operation, as long as the temperature of the fluid in the chamber 8 remains above a predetermined value, for example, of between 2° and 4°C with a pressure of up to, for example, 6 bar.

When the temperature of the fluid in the chamber 8 reaches the preset lower limit, the spring 32 of shape memory material yields instantaneously and, under the effect of the spring 33, the reaction and thrust member 30 applies a thrust in the region of the articulation between the plate-like members 21 and 22 of the toggle assembly such as to cause their articulation axis 23 to move beyond the axis A as seen in Figure 3.

As soon as the articulation axis 23 crosses the axis A, the body 16, which is acted on by the spring 19, brings about an upward movement of the lower end of the plate-like member 22 and a "closing together" of the plate-like members 21 and 22, as shown in broken outline in Figure 3. The body 16 can thus rise and its lower head portion 16b lifts the body 12 and the associated closure member 13 from the valve seat 14, allowing the fluid contained in the chamber 8 to be discharged through the duct 10.

This prevents freezing of the fluid in the system or circuit with which the discharge valve assembly 1 is operatively associated.

The valve assembly 1 can subsequently be reset in the initial conditions, for example, by rotation of a hollow, internally threaded knob 35 which is screwed onto a connector 36 of the shell 3 and to which a resetting rod 37 is connected. The screwing of the knob 35 onto the connector 36 brings about a translation of the rod 37 such as to return the toggle assembly 21, 22 to the initial position described above with reference to Figure 3.

Naturally, when this position has been reached, the user must unscrew the knob 35 again so as to move the resetting rod 37 away from the intermediate articulation of the toggle assembly once more since, otherwise, the switching of the configuration of that assembly would be prevented.

As an alternative to the screwable/unscrewable knob, the resetting may be performed by a spring push-button device with a resetting rod.

The valve assembly 1 is preferably but not necessarily formed in such a manner as to enable the shut-off device 12 to be opened as a result of the application of a manual control.

For this purpose, as can be seen in Figure 4 in particular, a rocker lever 38 is mounted so as to be pivotable in an intermediate zone, about a horizontal axis 39, in the vicinity of the cover 4 in the chamber 8. The rocker lever 38 has a first branch or arm 38a which extends as far as the vicinity of the intermediate articulation between the plate-like members 21 and 22 of the toggle assembly. A second arm 38b of the rocker lever, opposite the first, extends beneath a rod 40a of a push-button member 40 which is arranged so as to be translatable vertically in a seat 41 of the cover 4.

When the push-button member 40 is pressed, its rod 40a brings about pivoting of the rocker lever 38 about the axis 39, against the action of a reaction spring 42 (Figure 4), in an anticlockwise direction as seen in Figure 4, so that its branch or arm 38a can bring about the change in the configuration of the toggle assembly 21, 22, thus bringing about opening of the shut-off device 11.

In this case, the valve assembly can again be reset in the initial conditions by means of a resetting device, for example, of one of the types described above.

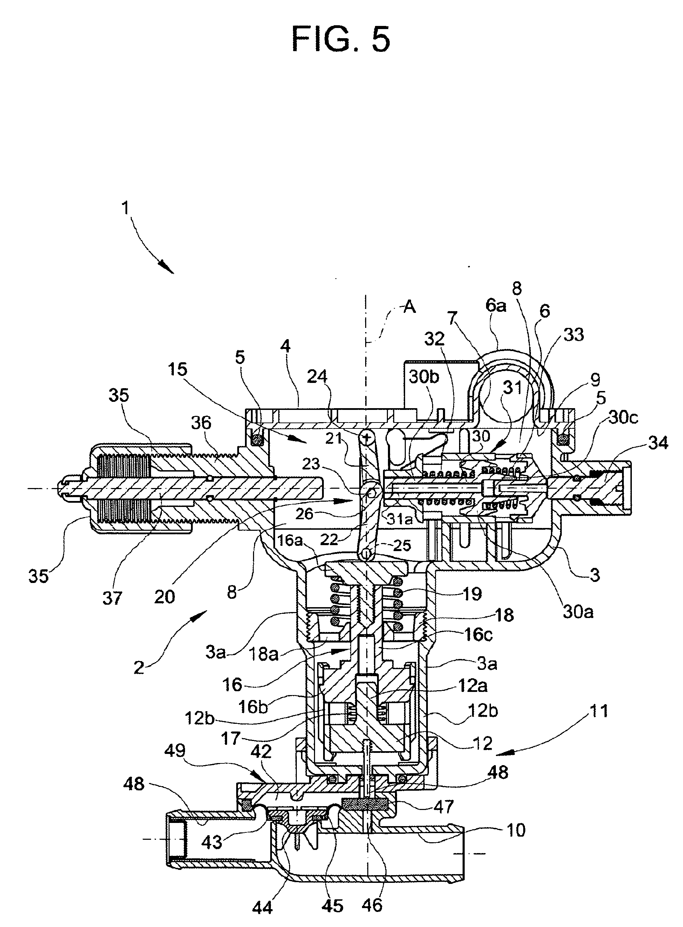

Figure 5 shows a variant of the above-described safety discharge valve assembly. In this drawing, parts and elements identical or corresponding to parts or elements that have already been described have again been attributed the same reference numerals as were used above.

In summary, in the variant of Figure 5, the shut-off device 11 comprises a servo-assisted valve device which controls communication between an inlet duct 48 which is intended to be connected to the fluid circuit or system with which the device according to the invention is associated, and an outlet or discharge duct 10. This valve assembly comprises a body 49 which is connected to the lower end of the tubular portion 3a of the shell 3 and in which a chamber 42 is defined between the ducts 48 and 10; a closure member 43 carried by a core 44 is mounted movably in the chamber 42 in order to cooperate with an associated valve seat 45 to control communication between the duct 48 and the discharge duct 10.

The closure member 43 is incorporated, in known manner, in a diaphragm in which at least one narrow communication hole or passageway is formed between the inlet duct 48 and the chamber 42.

A discharge duct 46 is formed in the body 49 between the chamber 42 and the discharge duct 10 and a closure member 47 carried by a rod 48 fixed to the body 12 is associated therewith.

The arrangement is such that, when the body 16 of the valve assembly 1 is kept in the restrained condition shown in Figure 5, the closure member 47 closes the discharge duct 46. In this situation, substantially the same hydraulic pressure prevails in the chamber 42 as in the inlet duct 48 and the closure member 43 is kept against the valve seat 45 so that the discharge duct is disconnected from the inlet duct 48.

When the temperature of the fluid in the chamber 8 falls below the previously defined threshold value, the toggle assembly 21, 22 is caused to switch by the reaction and thrust member 30 as a result of the yielding of the shape memory spring 32. As a result, the body 16 moves upwards under the thrust of the spring 19 and the closure member 47 consequently frees the discharge duct 46. The fluid in the chamber 42 can then be discharged into the outlet duct 10 through the discharge duct 46. The pressure of the fluid in the inlet duct 48 can then bring about lifting of the closure member 43 and of the associated core 44, freeing the valve seat 45 and thus putting the fluid system or circuit with which the valve assembly 1 is associated into communication with the discharge duct 10.

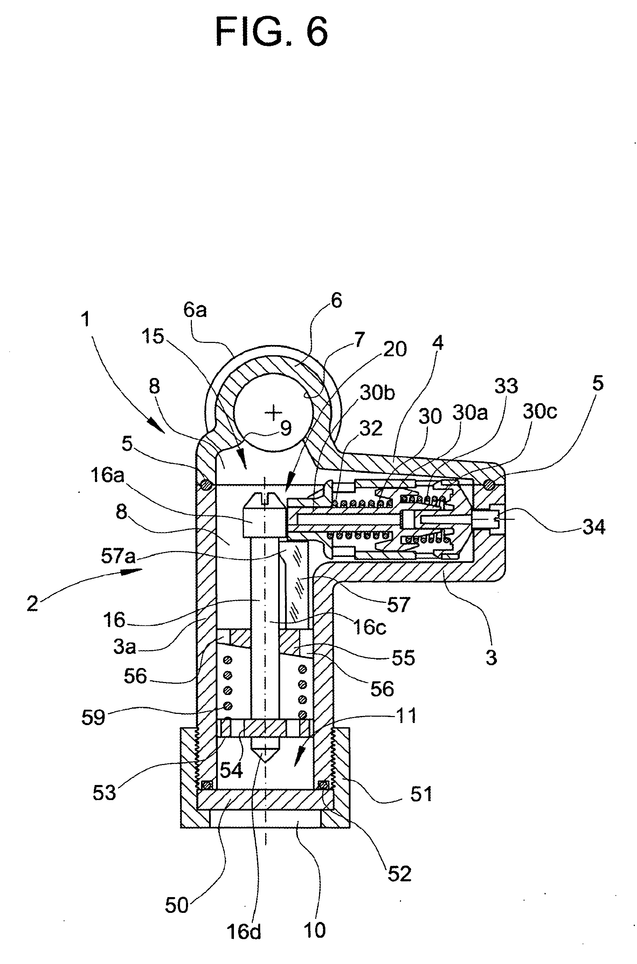

Figure 6 of the appended drawings shows another embodiment of the safety discharge valve assembly according to the invention.

In this drawing, parts or elements identical or substantially equivalent to parts and elements that have already been described have again been attributed the same reference numerals as were used above.

In the embodiment of Figure 6, the shut-off device 11 comprises a disk 50 of breakable material, for example glass, which is fixed by means of a ring nut 51 to the lower, open end of the tubular portion 3a of the shell 3, with the interposition of a sealing ring 52.

The control device 15 comprises a movable, rod-like member 16 having, at its upper end, a radially projecting head portion 16a and terminating, at its lower end, in a pointed tip 16d.

A plate 53 having a plurality of through-holes 54 is fixed to the lower end of the rod 16. The intermediate portion 16c of the rod 16 extends through a transverse partition 55 which is integral with or in any case fixed firmly to the shell 3 and is also provided with through-holes 56. A pawl 57 extends upwards from the upper face of the partition and terminates at its upper end in a lip 57a which can engage under the lower edge of the head portion 16a of the rod 16, as can be seen in Figure 6.

A spring 59 extends between the plate 53 and the partition 55 around the lower portion of the rod 16 and tends to urge the rod 16 towards the breakable disk 50.

The engagement of the lip 57a of the pawl 57 under the head portion 16a, however, is such as to hold the rod and, in particular, its lower end tip 16d at a predetermined distance from the breakable disk 50. In this condition, which is shown in Figure 6, the lateral surface of the head portion 16a faces an end of the reaction and thrust element 30.

In the condition shown in Figure 6, the chamber 8 is disconnected from the discharge duct 10 owing to the presence of the disk 50 fitted sealingly against the lower end of the shell 3.

When the temperature of the fluid in the chamber 8 falls below a predetermined threshold value, the shape memory spring 32 "yields" and the reaction and thrust member 30 is urged towards the head portion 16a of the rod 16 by the spring 33. The thrust is sufficient to bring about a slight transverse movement of the head portion 16a of the rod 16 so as to release the head portion from the lip 57a of the pawl 57. The spring 59 can then bring about rapid descent of the rod 16 towards the disk 50 which is thus broken as a result of the impact of the tip 16d against it.

As a result of the breaking of the breakable disk 50, the fluid contained in the chamber 8 is discharged from the valve assembly 1.

The valve assembly can then be reset by repositioning the rod 16 in the condition shown in Figure 6 by means of a tool and a new breakable disk 50 is fitted on the lower end of the tubular portion 3a of the shell 3 upon the removal and refitting of the ring nut 51.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A safety discharge valve assembly (1) for a fluid circuit, comprising
- a hollow body (2) in which there is defined a chamber (8) having an inlet opening (9) that is intended to be put into communication with said circuit;
- a discharge duct (10) with which a normally closed shut-off device (11) is associated; and
- a control device (15) which is associated with the shut-off device (11), is arranged in said chamber (8), and includes:
a movable member (16) which can move from a restrained condition to a released condition in order to bring about the opening of the shut-off device (11),
resilient means (19; 59) which tend to cause the movable member (16) to move to the released condition; and
a releasable and resettable retaining mechanism (20) which, in a first condition and in a second condition, is capable of restraining and of releasing said movable member (16), respectively; the retaining mechanism (20) comprising a resilient member (32) which is made of a shape memory material and is constructed and arranged in such a manner that, when the temperature of the fluid in the chamber (8) falls below a predetermined value, said retaining mechanism (20) moves from the first condition to the second condition to allow the shut-off device (11) to open;
the safety discharge valve assembly being **characterized in that** the retaining mechanism (20) comprises:
a toggle assembly (21-25) cooperating with said movable member (16), and
a reaction and thrust device (30-34) including a spring (32) made of a shape memory material;
the retaining mechanism (20) being capable of adopting
a first condition in which the reaction and thrust device (30-34) keeps the toggle assembly (21-25) in an extended condition in which said assembly retains said movable member (16) in the restrained condition, and
a second condition in which the reaction and thrust device (30-34) causes the toggle assembly (21-25) to move to a folded condition in which said assembly allows the movable member (16) to move from the restrained condition to the released condition.

2. A valve assembly according to claim 1, wherein the reaction and thrust device (30-34) comprises a reaction and thrust body (30) which is resiliently suspended in said hollow body (2) between said shape memory spring (32) and a reaction spring (33) which tends to bias said reaction and thrust body towards the toggle assembly (21-25).

3. A valve assembly according to claim 1 or claim 2, wherein the toggle assembly (21-25) comprises:
a first member (21) having one end articulated to the hollow body (2) about a fixed axis (24),
a second member (22) one end of which is articulated to the other end of the first member (21) and the other end (25) of which bears against said movable member (16);
the articulation (23) between said members (21, 22) being disposed on one side of a plane (A) extending through the articulation axis (24) of the first member (21) to the hollow body (2) and on the other side thereof, in the extended condition and in the folded condition of the toggle assembly (21-25), respectively.

4. A valve assembly according to any one of claims 1 to 3, wherein the reaction and thrust device (30-34) comprises an adjustment member (34) adapted for modifying the temperature threshold value.

5. A valve assembly according to any one of claims 1 to 3, comprising a manual resetting device (35-37) adapted for causing the toggle assembly (21-25) to move from said folded condition to said extended condition.

6. A valve assembly according to any one of the preceding claims, comprising a manually operable release device (38-41) capable of bringing about the release of the retaining mechanism (15) and consequent opening of the shut-off device.

7. A valve assembly according to any one of claims 1 to 5, and claim 6, wherein the manually operable release device (38-41) comprises a rocker lever (38) mounted pivotably in the hollow body (2) and having a first arm (38b) associated with a manually operable push button (40) and a second arm (38a) which, when said push button (40) is operated, can cause the toggle assembly (21-25) to move from said extended condition to said folded condition.

8. A valve assembly according to any of the preceding claims, wherein the shut-off device (11) comprises a closure member (13; 47) connected to said movable member (16) and associated with the discharge duct (10).

9. A valve assembly according to claim 8, wherein said closure member (47) is part of a servo-assisted discharge valve assembly (42-49).

10. A valve assembly according to claim 1, wherein the shut-off device (11) comprises a breakable closure member (50) closing the discharge duct (10), and the movable member is adapted, in the released condition, to bring about breakage of said closure member (50).

11. A valve assembly according to claim 10, wherein the retaining mechanism (20) comprises:
a pawl (57, 57a) which is arranged so as to be stationary in the hollow body (2) and can retain said movable member (16) in said restrained condition, and
a thrust device (31-34) including a spring (32) which is made of a shape memory material and can bring about the disengagement of the movable member (16) from said pawl (57, 57a) when the temperature of the fluid in said chamber (8) falls below the predetermined value.

## Patentansprüche

1. Eine Sicherheitsablassventilanordnung (1) für einen Fluidkreislauf, aufweisend
- einen hohlen Körper (2), in welchem eine Kammer (8) definiert ist, die eine Einlassöffnung (9) umfasst, die dazu gedacht ist, in Kommunikation mit dem Kreislauf gesetzt zu werden;
- einen Ablasskanal (10), welchem eine normalerweise geschlossene Abschaltvorrichtung (11) zugeordnet ist; und
- eine Steuervorrichtung (15), welche der Abschaltvorrichtung (11) zugeordnet ist, in der Kammer (8) angeordnet ist, und umfasst:
ein bewegliches Bauteil (16), welches sich von einem eingespannten Zustand zu einem freigegebenen Zustand bewegen kann, um die Öffnung der Abschaltvorrichtung (11) zu bewirken,
elastische Mittel (19; 59), welche darauf abzielen zu veranlassen, dass sich das bewegliche Bauteil (16) in dem freigegebenen Zustand bewegt; und
einen lösbaren und zurücksetzbaren Rückhaltemechanismus (20), welcher in einem ersten Zustand und in einem zweiten Zustand in der Lage ist, das bewegliche Bauteil (16) einzuspannen bzw. freizugeben; wobei der Rückhaltemechanismus (20) ein elastisches Bauteil (32) aufweist, welches aus einem Formgedächtnismaterial hergestellt ist, und so konstruiert und angeordnet ist, dass wenn die Temperatur des Fluids in der Kammer (8) unter einen vorbestimmten Wert fällt, sich der Rückhaltemechanismus (20) aus dem ersten Zustand in den zweiten Zustand bewegt, um der Abschaltvorrichtung (11) ein Öffnen zu ermöglichen;
die Sicherheitsablassventilanordnung ist **dadurch gekennzeichnet, dass** der Rückhaltemechanismus (20) aufweist:
eine Umschaltanordnung (21-25), die mit dem beweglichen Bauteil (16) zusammenwirkt, und
eine Reaktions- und Schubvorrichtung (30-34), die eine Feder (32) umfasst, die aus einem Formgedächtnismaterial hergestellt ist;
wobei der Rückhaltemechanismus (20) in der Lage ist, Folgendes anzunehmen
einen ersten Zustand, in welchem die Reaktions- und Schubvorrichtung (30-34) die Umschaltanordnung (21-25) in einem ausgedehnten Zustand hält, in welchem die Anordnung das bewegliche Bauteil (16) in dem eingespannten Zustand hält, und
einen zweiten Zustand, in welchem die Reaktions- und Schubvorrichtung (30-34) die Umschaltanordnung (21-25) dazu bringt, sich in einen gefalteten Zustand zu bewegen, in welchem die Anordnung dem beweglichen Bauteil (16) ermöglicht, sich von dem eingespannten Zustand zu dem freigegebenen Zustand zu bewegen.

2. Ventilanordnung nach Anspruch 1, bei welcher die Reaktions- und Schubvorrichtung (30-34) einen Reaktions- und Schubkörper (30) aufweist, welcher elastisch in dem hohlen Körper (2) zwischen der Formgedächtnisfeder (32) und einer Reaktionsfeder (33) aufgehängt ist, welche darauf abzielt, den Reaktions- und Schubkörper in Richtung der Umschaltanordnung (21-25) vorzuspannen.

3. Ventilanordnung nach Anspruch 1 oder Anspruch 2, bei welcher die Umschaltanordnung (21-25) aufweist:
ein erstes Bauteil (21) mit einem Ende, welches zu dem hohlen Körper (2) um eine feste Achse (24) beweglich ist,
ein zweites Bauteil (22), von welchem ein Ende beweglich ist relativ zu dem anderen Ende des ersten Bauteils (21), und von welchem sich das andere Ende (25) gegen das bewegliche Bauteil (16) stützt;
wobei die Gelenkverbindung (23) zwischen den Bauteilen (21, 22) sich auf einer Seite einer Ebene A befindet, welche sich in dem ausgedehnten Zustand bzw. in dem gefalteten Zustand der Umschaltanordnung (21-25) durch die Drehachse (24) des ersten Bauteils (21) zu dem hohlen Körper (2) und auf der anderen Seite davon erstreckt.

4. Ventilanordnung nach irgendeinem der Ansprüche 1 bis 3, bei welcher die Reaktions- und Schubvorrichtung (30-34) ein Einstellungsbauteil (34) aufweist, welches angepasst ist, um den Temperaturschwellwert zu modifizieren.

5. Ventilanordnung nach irgendeinem der Ansprüche 1 bis 3, eine manuelle Zurücksetzvorrichtung (35-37) aufweisend, die angepasst ist, um zu verursachen, dass sich die Umschaltanordnung (21-25) aus dem gefalteten Zustand in den ausgedehnten Zustand bewegt.

6. Ventilanordnung nach irgendeinem der vorhergehenden Ansprüche, aufweisend eine manuell betätigbare Freigabevorrichtung (38-41), die in der Lage ist, das Freigeben des Rückhaltemechanismus (15) und folgend ein Öffnen der Abschaltvorrichtung zu bewirken.

7. Ventilanordnung nach irgendeinem der Ansprüche 1 bis 5 und Anspruch 6, bei welcher die manuell betätigbare Freigabevorrichtung (38-41) einen Kipphebel (38) aufweist, der drehbar in dem hohlen Körper (2) befestigt ist, und einen ersten Arm (38b) umfasst, der einem manuell betätigbaren Druckknopf (40) und einem zweiten Arm (38a) zugeordnet ist, wobei der zweite Arm (38a), wenn der Druckknopf (40) betätigt wird, die Umschaltanordnung (21-25) dazu bringen kann, sich aus dem ausgedehnten Zustand in den gefalteten Zustand zu bewegen.

8. Ventilanordnung nach irgendeinem der vorhergehenden Ansprüche, bei welcher die Abschaltvorrichtung (11) ein Schließbauteil (13; 47) aufweist, welches mit dem beweglichen Bauteil (16) verbunden und dem Ablasskanal (10) zugeordnet ist.

9. Ventilanordnung nach Anspruch 8, bei welcher das Schließbauteil (47) Teil einer Servoassistenzablassventilanordnung (42-49) ist.

10. Ventilanordnung nach Anspruch 1, bei welcher die Abschaltvorrichtung (11) ein zerbrechliches Schließbauteil (50) aufweist, welches den Ablasskanal (10) verschließt, und das bewegliche Bauteil angepasst ist, um in dem freigegebenen Zustand ein Brechen des Schließbauteils (50) zu bewirken.

11. Ventilanordnung nach Anspruch 10, bei welcher der Rückhaltemechanismus (20) aufweist:
eine Raste (57, 57a), welche angeordnet ist, um in dem hohlen Körper (2) stationär zu sein, und welche das bewegliche Bauteil (16) in dem eingespannten Zustand zurückhalten kann, und
eine Schubvorrichtung (31-34), die eine Feder (32) umfasst, die aus einem Formgedächtnismaterial hergestellt ist, und das Lösen des beweglichen Bauteils (16) von der Raste (57, 57a) bewirken kann, wenn die Temperatur des Fluids in der Kammer (8) unter den vorbestimmten Wert fällt.

## Revendications

1. Purgeur de sécurité (1) pour circuit de fluide, comprenant :
- un corps creux (2) dans lequel est définie une chambre (8) ayant une ouverture d'entrée (9) qui est destinée à être mise en communication avec ledit circuit ;
- un conduit de refoulement (10) auquel est associé un dispositif de fermeture normalement fermé (11) ; et
- un dispositif de commande (15) qui est associé au dispositif de fermeture (11), est placé dans ladite chambre (8), et comprend :
un élément mobile (16) qui peut se mouvoir d'un état contraint à un état libéré afin de provoquer l'ouverture du dispositif de fermeture (11),
un moyen résilient (19 ; 59) qui tend à faire se déplacer l'élément mobile (16) vers l'état libéré ; et
un mécanisme de retenue libérable et pouvant être rétabli (20) qui, dans un premier état et dans un deuxième état, est capable respectivement de contenir et de libérer ledit élément mobile (16) ; le mécanisme de retenue (20) comprenant un élément résilient (32) qui est fait d'un matériau à mémoire de forme et est construit et agencé de telle manière que, quand la température du fluide dans la chambre (8) passe sous une valeur prédéterminée, ledit mécanisme de retenue (20) passe du premier état au deuxième état pour permettre au dispositif de fermeture (11) de s'ouvrir ;
le purgeur de sécurité étant **caractérisé en ce que** le mécanisme de retenue (20) comprend :
un ensemble articulé (21-25) coopérant avec ledit élément mobile (16), et
un dispositif de réaction et de poussée (30-34) comprenant un ressort (32) fait d'un matériau à mémoire de forme ;
le mécanisme de retenue (20) étant capable de prendre
un premier état dans lequel le dispositif de réaction et de poussée (30-34) maintient l'ensemble articulé (21-25) dans un état étendu dans lequel ledit ensemble retient ledit élément mobile (16) dans l'état contraint, et
un deuxième état dans lequel le dispositif de réaction et de poussée (30-34) fait passer l'ensemble articulé (21-25) dans un état plié dans lequel ledit ensemble permet à l'élément mobile (16) de passer de l'état contraint à l'état libéré.

2. Purgeur selon la revendication 1, dans lequel le dispositif de réaction et de poussée (30-34) comprend un corps de réaction et de poussée (30) qui est suspendu de façon résiliente dans ledit corps creux (2) entre ledit ressort à mémoire de forme (32) et un ressort de réaction (33) qui tend à rappeler ledit corps de réaction et de poussée vers l'ensemble articulé (21-25).

3. Purgeur selon la revendication 1 ou 2, dans lequel l'ensemble articulé (21-25) comprend :
un premier élément (21) ayant une extrémité articulée avec le corps creux (2) autour d'un axe fixe (24),
un deuxième élément (22) dont une extrémité est articulée avec l'autre extrémité du premier élément (21) et dont l'autre extrémité (25) est en appui contre ledit élément mobile (16) ;
l'articulation (23) entre lesdits éléments (21, 22) étant placée sur un côté d'un plan (A) s'étendant à travers l'axe d'articulation (24) du premier élément (21) jusqu'au corps creux (2) et de l'autre côté de celui-ci, respectivement dans l'état étendu et dans l'état plié de l'ensemble articulé (21-25).

4. Purgeur selon l'une quelconque des revendications 1 à 3, dans lequel le dispositif de réaction et de poussée (30-34) comprend un élément de réglage (34) adapté pour modifier la valeur de seuil de température.

5. Purgeur selon l'une quelconque des revendications 1 à 3, comprenant un dispositif de rétablissement manuel (35-37) adapté pour faire passer l'ensemble articulé (21-25) dudit état plié audit état étendu.

6. Purgeur selon l'une quelconque des revendications précédentes, comprenant un dispositif de libération actionnable manuellement (38-41) capable de déclencher la libération du mécanisme de retenue (15) et l'ouverture consécutive du dispositif de fermeture.

7. Purgeur selon l'une quelconque des revendications 1 à 5, et la revendication 6, dans lequel le dispositif de libération actionnable manuellement (38-41) comprend un levier oscillant (38) monté à pivotement dans le corps creux (2) et ayant un premier bras (38b) associé à un bouton poussoir actionnable manuellement (40) et un deuxième bras (38a) qui, quand ledit bouton poussoir (40) est actionné, peut faire passer l'ensemble articulé (21-25) dudit état étendu audit état plié.

8. Purgeur selon l'une quelconque des revendications précédentes, dans lequel le dispositif de fermeture (11) comprend un élément de fermeture (13 ; 47) connecté audit élément mobile (16) et associé au conduit de refoulement (10).

9. Purgeur selon la revendication 8, dans lequel ledit élément de fermeture (47) fait partie d'un purgeur piloté (42-49).

10. Purgeur selon la revendication 1, dans lequel le dispositif de fermeture (11) comprend un élément de fermeture fragile (50) fermant le conduit de refoulement (10), et l'élément mobile est adapté, dans l'état libéré, pour provoquer la rupture dudit élément de fermeture (50).

11. Purgeur selon la revendication 10, dans lequel le mécanisme de retenue (20) comprend :
une griffe (57, 57a) qui est agencée de façon à être fixe dans le corps creux (2) et qui peut retenir ledit élément mobile (16) dans ledit état contraint, et
un dispositif de poussée (31-34) comprenant un ressort (32) qui est fait d'un matériau à mémoire de forme et qui peut provoquer le dégagement de l'élément mobile (16) d'avec ladite griffe (57, 57a) quand la température du fluide dans ladite chambre (8) passe sous la valeur prédéterminée.
